# EUROPÄISCHE PATENTSCHRIFT

(11) **EP 2 276 577 B1**
(45) Veröffentlichungstag und Bekanntmachung des Hinweises auf die Patenterteilung: **30.07.2014**
(21) Anmeldenummer: 09729239.5
(22) Anmeldetag: 17.03.2009
(51) Int. Cl.: B04C 3/04, B04C 3/06

(54) **ABSCHEIDER FÜR EINE KURBELGEHÄUSEENTLÜFTUNG EINER BRENNKRAFTMASCHINE**
SEPARATOR FOR A CRANKCASE VENTILATION OF AN INTERNAL COMBUSTION ENGINE
SÉPARATEUR POUR UNE VENTILATION DU CARTER D'UN MOTEUR À COMBUSTION INTERNE

(30) Priorität: 08.04.2008 DE 102008017919
(43) Veröffentlichungstag der Anmeldung: 26.01.2011
(73) Patentinhaber: Mann + Hummel GmbH, 71638 Ludwigsburg (DE)
(72) Erfinder: SCHLEIDEN, Thomas, 71720 OBERSTENFELD (DE)
(86) Internationale Anmeldenummer: PCT/EP2009/053127
(87) Internationale Veröffentlichungsnummer: WO 2009/124828

(56) Entgegenhaltungen:
- EP-A- 1 304 453
- EP-A- 1 568 861
- DE-A1- 19 951 312
- FR-A- 1 320 200

## Beschreibung

Die Erfindung betrifft einen Abscheider für eine Kurbelgehäuseentlüftung einer Brennkraftmaschine mit den Merkmalen nach dem Oberbegriff des Anspruchs 1.

### Stand der Technik

Bei der Kurbelgehäuseentlüftung von Brennkraftmaschinen werden Drallabscheider mit einer Drallkammer eingesetzt. Die Drallkammer erstreckt sich entlang einer Längsachse und weist bezogen auf diese Längsachse ein eingangsseitiges Ende mit einem tangentialen Einlass für den Entlüftungsstrom auf. Der Entlüftungsstrom erfährt in der Drallkammer infolge der tangentialen Einleitung einen Drall, der in Verbindung mit den wirkenden Fliehkräften zu einer Separierung des im Entlüftungsstrom mitgeführten Öls führt. Dieses setzt sich an den Wänden der Drallkammer ab und wird durch eine Drainageöffnung abgeschieden.

Typischerweise wird hierzu die Bauform des sogenannten Gegenstromzyklons eingesetzt, bei der die Drainageöffnung für das Öl und der Auslass für den gereinigten Gasstrom an gegenüberliegenden Enden der Drallkammer liegen. Der Auslass liegt dabei auf der gleichen Seite wie der Einlass, während die Drainageöffnung an der gegenüberliegenden Seite angeordnet ist. Hierbei erfährt die Strömung eine Umlenkung und wird durch ein sogenanntes Tauchrohr an der eingangsseitigen Oberseite der Drallkammer ausgeleitet. Alternativ können auch sogenannte Gleichstromzyklone zum Einsatz kommen, bei denen die Drainageöffnung für das Öl und der separate Auslass für das Reingas auf der gleichen Seite und dabei gegenüberliegend zum Einlass liegen. Im direkten Vergleich weist der Gegenstromzyklon ein besseres Verhältnis zwischen Druckverlust und Trennkorndurchmesser bzw. Abscheidegrad auf, wobei der Trennkorndurchmesser als Maß für die untere Grenzwertgröße der abzuscheidenden Öltröpfchen gilt.

Aus der DE 199 51 312 A1 ist eine Nebelabscheidevorrichtung bekannt mit einem Gehäuse mit einer Eintrittsöffnung für den Nebel und einer Austrittsöffnung für das gereinigte Gas, wobei das Gehäuse im Bereich des Strömungsweges zwischen Eintrittsöffnung und Austrittsöffnung zur Aufnahme eines oder mehrerer Zyklon ausgebildet ist. Die Zyklone können in zwei alternativen Ausführungsformen als Axialzyklone mit Drallrückrichtung oder als Radialzyklone ausgeführt sein.

Darüber hinaus ist bekannt, dass bei Drallabscheidern im allgemeinen der Trennkorndurchmesser neben dem Druckverlust auch von der Baugröße des Abscheiders abhängt. Der Trennkorndurchmesser sinkt bei gleichem Druckverlust mit abnehmender Baugröße des Drallabscheiders. Somit steigt auch der Abscheidegrad für kleinere Partikel bei abnehmender Baugröße. Aus diesem Grunde besteht der Bedarf, anstelle eines oder einiger weniger größerer Drallabscheider eine höhere Anzahl von kleineren, parallel geschalteten Drallabscheidern einzusetzen.

Allerdings sind der Verkleinerung der Gegenstromzyklone beispielsweise wegen des vorhandenen Tauchrohres herstellungsbedingte geometrische Grenzen gesetzt, so dass die Miniaturisierung nicht beliebig weit vorangetrieben werden kann. Sinngemäß das Gleiche gilt auch für die Gleichstromzyklone, bei denen die Drainageöffnung für das Öl und der Auslass für den gereinigten Gasstrom einen entsprechenden Bauraum erfordern. Demnach besteht weiterhin Bedarf, den Abscheidegrad bei verringertem Bauvolumen zu verbessern.

Der Erfindung liegt die Aufgabe zugrunde, einen gattungsgemäßen Abscheider derart weiterzubilden, dass eine erhöhte Wirksamkeit bei kleinem Bauraum erzielt ist.

Diese Aufgabe wird durch einen Abscheider mit den Merkmalen des Anspruchs 1 gelöst.

### Offenbarung der Erfindung

Es wird ein Abscheider für eine Kurbelgehäuseentlüftung einer Brennkraftmaschine vorgeschlagen, bei dem die Drallkammer bezogen auf ihre Längsachse an ihrem dem eingangsseitigen Ende gegenüberliegenden ausgangsseitigen Ende einen gemeinsamen Auslass für den Entlüftungsstrom und das mit dem Entlüftungsstrom mitgeführte Öl aufweist.

Die Drallkammer wirkt hier nicht als Abscheider, da das Öl abweichend von der vorbekannten Bauform als Gleichstromzyklon gemeinsam mit dem Entlüftungsstrom austritt, also noch nicht aus dem Entlüftungsstrom abgeschieden ist. Vielmehr wirkt die Drallkammer als sogenannter Koaleszenzer, in dem der Drall zu einer Koagulation von Ölnebel und feinsten Öltröpfchen zu größeren Öltröpfchen oder zu einem Ölfilm führt. Der Verzicht auf eine ausgangsseitige Trennung von Öl und Entlüftungsstrom erlaubt eine nahezu beliebige Miniaturisierung der Drallkammer, die dann in entsprechend hoher Stückzahl eingesetzt wird. Die Koagulationswirkung der einzelnen Koaleszenzer kann durch die Baugrößenminimierung erheblich gesteigert werden. Der austretende Ölfilm bzw. die austretenden koagulierten großen Öltropfen lassen sich mit einem einfach ausgebildeten Nachabscheider ohne weiteres aus dem Entlüftungsstrom abscheiden. Einen derartigen Nachabscheider kann im einfachsten Fall eine Strömungsberuhigung oder eine einfache Umlenkung darstellen. Der Zusatzaufwand des Nachabscheiders wir durch den verbesserten Wirkungsgrad der Koaleszenzer mehr als ausgeglichen.

In vergleichenden Untersuchungen hat sich gezeigt, dass Geometrien des Koaleszenzers bis hinunter zu einem Durchmesser von ca. 10 mm und einer Höhe von ca. 20 mm möglich sind. Daraus ergibt sich, dass bei gleichem Druckverlust und Gesamtvolumenstrom die Zahl der Koaleszenzer im Vergleich zu Gegenstromzyklonen etwa verfünffacht werden kann. Der hierdurch erreichbare Trennkorndurchmesser beträgt theoretisch etwa die Hälfte des Trennkorndurchmessers eines vergleichbaren Abscheiders mit Gegenstromzyklonen. Es kann sogar eine sehr gute Abscheideleistung für Partikel bzw. Tröpfchen im Bereich < 1 µm erwartet werden.

In bevorzugter Weiterbildung verjüngt sich die Drallkammer zumindest abschnittsweise vom Einlass ausgehend zum Auslass, wobei diese Verjüngung insbesondere konisch ausgeführt ist.

Alternativ besteht auch die Möglichkeit, die Drallkammer durchgängig zylindrisch zu gestalten oder einen oder mehrere Durchmessersprünge zum Auslass hin auszubilden.

Beim Durchtritt des Entlüftungsstromes durch die Drallkammer verringert sich der Durchmesser seiner Drallbewegung sukzessive, wodurch der Drall erhöht und die Abscheideleistung verbessert wird.

Es kann zweckmäßig sein, den Auslass ebenso wie den Einlass tangential auszuführen, wobei der Drall in entsprechende Auslassgeschwindigkeit umgesetzt wird. Bevorzugt ist der Auslass achsparallel und insbesondere koaxial zur Längsachse der Drallkammer angeordnet, wodurch die Drallbildung und damit die koagulierende Wirkung begünstigt wird.

Als Nachabscheider können verschiedene geeignete Bauformen in Betracht kommen, wobei einfache Ausführungen wegen der vorangegangenen Koagulation des Ölnebels bzw. der Öltröpfchen ausreichend sind. Bevorzugt weist der Nachabscheider mindestens eine Prallfläche für das mit dem Entlüftungsstrom mitgeführte Öl auf. Aufgrund ihrer Massenträgheit prallen die Öltröpfchen gegen die Prallfläche und fließen dort als Ölfilm ab, während der gereinigte Gasstrom an der Prallfläche vorbei strömen kann. Mit einfachsten Mitteln ist hierdurch eine wirkungsvolle Abscheidung der koagulierten Öltröpfchen möglich.

In vorteilhafter Weiterbildung ist der Nachabscheider als Labyrinth für den Entlüftungsstrom mit mehreren, insbesondere winklig zueinander geneigten Prallfläche ausgebildet. Durch die mehrfache, labyrinthartige Umlenkung tritt mehrfach der vorstehend beschriebene Effekt ein, dass der Gasstrom ohne weiteres den Umlenkungen folgen kann, während die koagulierten Öltröpfchen aufgrund ihrer Massenträgheit diesen Umlenkungen nicht ohne weitres folgen können und deshalb auf die Prallflächen auftreffen. Bei geringem Bauraum ist wegen der Größe der koagulierten Öltröpfchen eine wirkungsvolle Abscheidung möglich.

Bevorzugt ist mindestens eine Prallfläche zumindest näherungsweise senkrecht zur Längsachse der Drallkammer bzw. ihres Auslasses angeordnet. Auf diese Weise wird der Effekt ausgenutzt, dass der Entlüftungsstrom mit den mitgeführten koagulierten Öltropfen eine hohe Geschwindigkeit und damit eine hohe kinetische Energie aufweist, so dass ein erheblicher Anteil der koagulierten Öltropfen aufgrund seiner Massenträgheit auch ohne mehrfache Strömungsumlenkung auf die entsprechende Prallfläche trifft und damit aus dem Entlüftungsstrom abgeschieden ist.

Letztlich kann im einfachsten Fall einer Abscheidung eine Strömungsberuhigung sinnvoll sein, wobei die Partikel entsprechend der Erdbeschleunigung sedimentieren.

Unter bestimmten Bedingungen kann es zweckmäßig sein, nur eine als Koaleszenzer ausgeführte Drallkammer mit einem nachgeschalteten Nachabscheider vorzusehen. In bevorzugter Ausführungsform sind mehrere Drallkammern parallel zueinander geschaltet. Dies ermöglicht die gewünschte Baugrößenverringerung bei gleichzeitiger Erhöhung der Anzahl der parallel geschalteten Drallkammern, wodurch der Koagulationsgrad verbessert wird.

Vorteilhaft ist ein insbesondere als Schieberegister ausgebildetes Register zur motorlastabhängigen Zu- und Abschaltung einzelner Drallkammern vorgesehen. Hierdurch wird dem Umstand Rechnung getragen, dass sich mit steigender Motorlast auch ein steigender Volumenstrom des Entlüftungsstromes einstellt. Durch geeignete Verschaltung beispielsweise mit einer Druckdose oder einer anderen Steuereinrichtung kann erreicht werden, dass die im jeweiligen Motorbetriebspunkt zugeschalteten Drallkammern einzeln mit einem derartigen Teilstrom beaufschlagt sind, für den sie mit optimaler Koagulationswirkung ausgelegt sind. Auf diese Weise kann der Abscheider gleichzeitig auch zur Regelung des Kurbelgehäusedruckes eingesetzt werden.

Insgesamt wird durch die Anordnung sehr vieler kleiner Drallkammern eine hohe Flexibilität bei der geometrischen Auslegung ermöglicht, die eine Integration in den vorhandenen, meist sehr begrenzten Bauraum vereinfacht. Das Gesamtkonzept ist dabei unabhängig von seiner Einbaulage relativ zur Schwerkraftrichtung, da die Koaleszenzer keine richtungsgebundenen Drainageöffnungen aufweisen. Bei bestimmten, beispielsweise sehr flachen Bauräumen wird die Integration eines Feinölabscheiders durch die erfindungsgemäße Ausführung infolge der möglichen Verkleinerung und Lageunabhängigkeit überhaupt erst möglich.

### Kurze Beschreibung der Zeichnungen

Ein Ausführungsbeispiel der Erfindung ist nachfolgend anhand der Zeichnung näher beschrieben. Es zeigen:
Figur 1 in schematischer Längsschnittdarstellung eine Drallkammer des Abscheiders nach Fig. 2 mit einem gemeinsamen Auslass für den Entlüftungsstrom und des mit dem Entlüftungsstrom mitgeführten Öls;
Figur 2 in schematischer Blockdarstellung einen erfindungsgemäß ausgeführten Abscheider mit Drallkammern nach Fig. 1 und einem nachgeschalteten, Prallflächen aufweisenden Nachabscheider,
Figur 3 eine Geometrievariante eines Abscheiders mit im Wesentlichen zylindrischer Form,
Figur 4 eine weitere Geometrievariante eines Abscheiders mit einem Durchmessersprung.

### Ausführungsform(en) der Erfindung

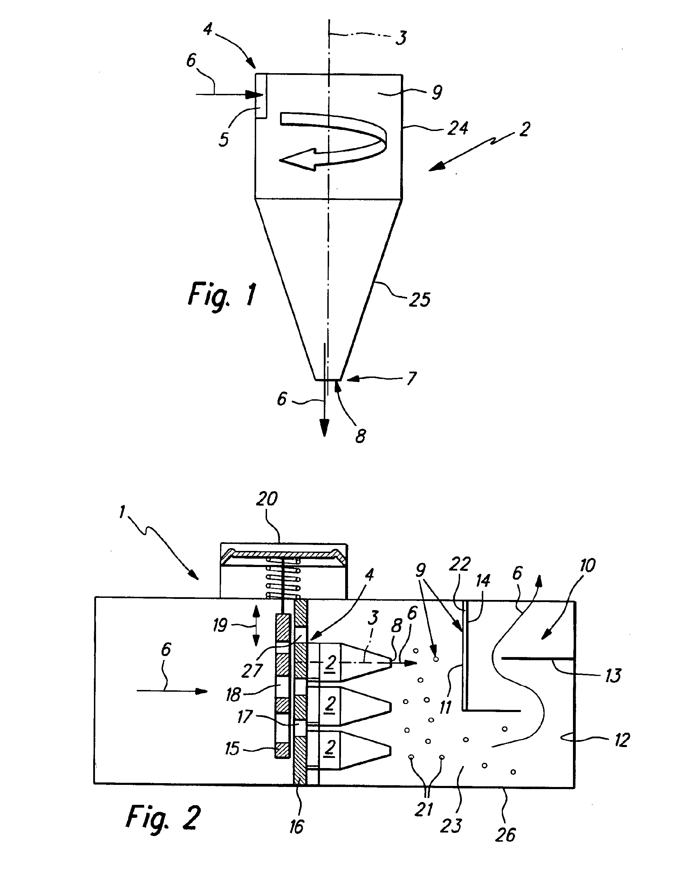

Fig. 1 zeigt in schematischer Längsschnittdarstellung eine als sogenannter Koaleszenzer ausgeführte Drallkammer 2 des in Fig. 2 dargestellten Abscheiders 1. Die Drallkammer 2 umfasst ein Gehäuse, welches sich rotationssymmetrisch entlang einer Längsachse 3 erstreckt, und weiches bezogen auf die Längsachse 3 ein eingangsseitiges Ende 4 und ein gegenüberliegendes ausgangsseitiges Ende 7 aufweist. Am eingangsseitigen Ende 4 mündet ein Einlass 5 tangential in die Drallkammer 2. Im gezeigten Ausführungsbeispiel weist der Einlass 5 einen rechteckigen Querschnitt auf. Es können aber auch andere Querschnittsformen zweckmäßig sein.

Im Bereich des tangentialen Einlasses 5 ist das Gehäuse der Drallkammer 2 als zylindrischer Abschnitt 24 ausgebildet, an den sich in Richtung zum ausgangseitigen Ende 7 hin ein konisch sich verengender Abschnitt 25 anschließt. Der konische Abschnitt 25 ist am ausgangsseitigen Ende 7 offen und bildet dort einen Auslass 8 mit kreisförmigem Querschnitt, dessen Durchmesser gleich dem Durchmesser des konischen Abschnitts 25 am ausgangsseitigen Ende 7 ist. Anstelle eines konischen Abschnitts 25 kann auch ein anderer sich verengender Formverlauf oder ein zylindrischer Verlauf zweckmäßig sein. Die Mittelachse des Auslasses 8 liegt bevorzugt achsparallel, im gezeigten Ausführungsbeispiel koaxial zur Längsachse 3 der Drallkammer 2.

Im Betrieb einer nicht dargestellten Brennkraftmaschine entstehen in ihrem Kurbelgehäuse sogenannte Blow-by-Gase, die als Entlüftungsstrom 6 durch den Einlass 5 tangential in den zylindrischen Abschnitt 24 der Drallkammer 2 eingeleitet werden. Hierbei tragen sie nicht näher dargestelltes Öl 9 in Form von Dampf, Nebel und feinen Tröpfchen sowie andere Begleitstoffe in die Drallkammer 2 ein. Durch die tangentiale Einleitung bildet sich in der Drallkammer 2 entsprechend einem dort dargestellten Pfeil ein Drall aus, der zur Koagulation des Ölnebels bzw. der Dämpfe und feinen Tröpfchen zu deutlich größeren Öltropfen und auch zu einem Ölfilm an den Innenwänden der Drallkammer 2 führt.

Die Drallkammer 2 ist mit Ausnahme des Einlasses 5 und des Auslasses 8 geschlossen, so dass der Entlüftungsstrom 6 gemeinsam mit dem koagulierten Öl 9 aus dem Auslass 8 austritt.

Fig. 2 zeigt in schematischer Blockdarstellung einen erfindungsgemäß ausgeführten Abscheider 1 mit einer Vielzahl von Drallkammern 2 nach Fig. 1, wobei hier der besseren Übersichtlichkeit halber schematisch nur drei Drallkammern 2 dargestellt sind. Tatsächlich kann jedoch auch eine deutlich höhere Anzahl an Drallkammern 2 vorteilhaft sein. Für bestimmte Anwendungsfälle kann aber auch die Anordnung von nur einer Drallkammer 2 zweckmäßig sein. Der Abscheider 1 ist für die Kurbelgehäuseentlüftung einer Brennkraftmaschine insbesondere eines Kraftfahrzeuges vorgesehen, wobei der hier entstehende Entlüftungsstrom 6 in ein Gehäuse 26 des Abscheiders 1 eingeleitet wird. Im Gehäuse 26 ist eine Basisplatte 16 angeordnet, die die Drallkammern 2 trägt, und die für jede Drallkammer 2 je eine Einlassöffnung 17 aufweist. Durch die Einlassöffnungen 17 wird der Entlüftungsstrom 6 in das jeweils eingangsseitige Ende 4 der Drallkammern 2 eingespeist und tritt an den Auslässen 8 aus. Entsprechend der im Zusammenhang mit Fig. 1 weiter oben beschriebenen Koagulationswirkung bildet sich aus dem mit dem Entlüftungsstrom 6 mitgeführten Öl 9 eine Vielzahl von größeren, koagulierten Öltropfen 21, die gemeinsam mit dem Entlüftungsstrom 6 aus den Auslässen 8 der Drallkammern 2 ausströmen.

Der Innenraum des Gehäuses 26 ist durch die Basisplatte 16 derart aufgeteilt, dass stromab der Basisplatte 16 mit den Drallkammern 2 ein Sammelraum 23 gebildet ist. In diesem Sammelraum 23 ist ein Nachabscheider 10 angeordnet, der vorteilhaft mindestens eine Prallfläche 11 aufweist. Im gezeigten Ausführungsbeispiel sind mehrere Wände mit mehreren Prallflächen 11, 12, 13, 14 zu einem Labyrinth angeordnet, durch welches der Entlüftungsstrom 6 schlangenförmig ausgeleitet wird. Im gezeigten Ausführungsbeispiel liegen die Prallflächen 11, 12, 13, 14 senkrecht zueinander. Es können aber auch andere Winkelausrichtungen zweckmäßig sein. Dabei liegt mindestens eine Prallfläche 11 senkrecht zur Längsachse 3 der Drallkammern 2 bzw. der zugehörigen Auslässe 8. Im gezeigten Ausführungsbeispiel liegen zwei Prallflächen 11, 12 senkrecht dazu und dabei in direkter Sichtlinie zu den Auslässen 8. Anstelle der senkrechten 90°-Lage kann auch ein anderer stumpfer Winkel von bevorzug ≥ 45° und insbesondere ≥ 60° zweckmäßig sein. Im einfachsten Fall stellt das Volumen des Sammelraums 23 den Nachabscheider dar, wobei eine Abtrennung des Öls aus dem Entlüftungsgas infolge Sedimentation ohne weitere Umlenkungen erfolgt.

Der Entlüftungsstrom 6 ist entsprechend dem schlangenförmig dargestellten Pfeil durch den labyrinthartigen Nachabscheider 10 hindurchgeführt, während die koagulierten Öltropfen 21 aufgrund ihrer Massenträgheit auf die Prallflächen 11, 12, 13,14 treffen und dort jeweils einen Ölfilm 22 bilden, wie er beispielhaft an der Prallfläche 11 dargestellt ist. Von dort kann das Öl 9 abtropfen und über eine nicht dargestellte Drainage zurück in den Ölsumpf der Brennkraftmaschine geführt werden. Der durch den Nachabscheider 10 gereinigte Entlüftungsstrom 6 wird der frischen Verbrennungsluft der Brennkraftmaschine beigemischt.

Für eine motorlastabhängige Steuerung des Abscheiders 1 ist stromauf der Basisplatte 16 ein als Schieberegister ausgeführtes Register 15 angeordnet, welches verschieden große Steueröffnungen 18 aufweist. Das Register 15 ist in Richtung eines Doppelpfeiles 19 parallel zur Fläche der Basisplatte 16 verschiebbar, wodurch abhängig vom Verschiebezustand eine oder mehrere Steueröffnungen 18 in Überdeckung mit den Einlassöffnungen 17 der Drallkammern 2 liegen. Mit steigender Motorlast und damit steigendem Druck im Kurbelgehäuse kann eine zunehmende Anzahl von Drallkammern 2 zugeschaltet und bei sinkender Motorleistung auch wieder abgeschaltet werden. Ergänzend hierzu kann in der Basisplatte 16 oder an anderer geeigneter Stelle noch eine Bypassöffnung 27 angeordnet werden, welche bei Volllast unter Umgehung der Drallkammern 2 mittels des Registers 15 und einer zugeordneten Steueröffnung 18 freigeschaltet wird. Die Steuerung des Registers 15 kann auf verschiedene Weise erfolgen. Im gezeichneten Ausführungsbeispiel ist hierzu eine Druckdose 20 vorgesehen, die beispielsweise mit dem Druck im Kurbelgehäuse der Brennkraftmaschine beaufschlagt wird. Hierdurch entsteht ein Zusammenhang zwischen dem Druck im Kurbelgehäuse und der Anzahl der zu- bzw. abgeschalteten Drallkammern 2. Es ist sichergestellt, dass der zulässige Bereich für den Kurbelgehäusedruck eingehalten wird und die einzelnen Drallkammern 2 jeweils mit optimaler Strömungsgeschwindigkeit und Druckverlust durchströmt werden.

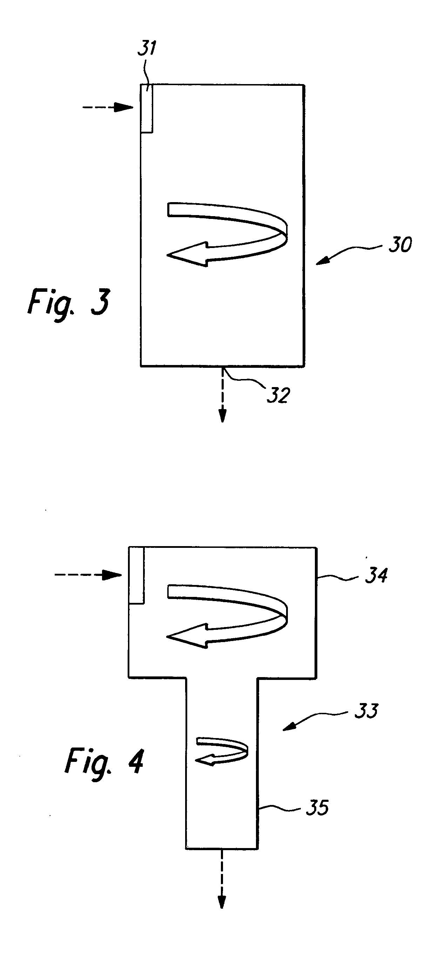

Der in Figur 3 dargestellte Abscheider 30 besitzt - wie in Figur 1 auch dargestellt - einen tangentialen Einlass 31 und einen Auslass für das Reingas und für das Öl Auslass 32. Der Auslass 32 ist lediglich eine Bohrung, die am Boden des Abscheiders 30 vorgesehen ist und mit einer hier nicht dargestellten Leitung verbunden werden kann. Der Abscheider 30 ist über seine ganze Länge zylindrisch ausgeführt. Damit wird eine konstante und sich nicht beschleunigende Luftströmung innerhalb des Abscheiders erzeugt.

Eine weitere Variante ist in Figur 4 gezeigt. Dieser Abscheider 33 weist einen Durchmessersprung auf. Der obere Teil 34 ist entsprechend dem in Figur 3 gezeigten Abscheider gestaltet. Unterhalb dieses oberen Teils befindet sich ein Abscheiderteil 35 mit einem reduzierten Durchmesser. Selbstverständlich besteht auch die Möglichkeit, weitere Durchmessersprünge anzuordnen oder die Durchmessersprünge feiner abzustufen. Das Reingas und das Öl wird - wie in Figur 3 beschrieben - ausgeleitet.

## Patentansprüche

1. Abscheider (1) für eine Kurbelgehäuseentlüftung einer Brennkraftmaschine, umfassend mindestens eine sich entlang einer Längsachse (3) erstreckende Drallkammer (2), wobei die Drallkammer (2) bezogen auf ihre Längsachse (3) an einem eingangsseitigen Ende (4) einen tangentialen Einlass (5) für einen Entlüftungsstrom (6) aufweist wobei die Drallkammer (2) bezogen auf die Längsachse (3) an ihrem dem eingangsseitigen Ende (4) gegenüberliegenden ausgangsseitigen Ende (7) einen gemeinsamen Auslass (8) für den Entlüftungsstrom (6) und mit dem Entlüftungsstrom (6) mitgeführtes Öl (9) aufweist, und wobei der Drallkammer (2) ein Nachabscheider (10) nachgeschaltet ist.

2. Abscheider nach Anspruch 1, **dadurch gekennzeichnet, dass** sich die Drallkammer (2) zumindest abschnittsweise vom Einlass (5) ausgehend zum Auslass (8) hin insbesondere konisch oder über einen Durchmessersprung verjüngt.

3. Abscheider nach Anspruch 1 oder 2, **dadurch gekennzeichnet, dass** der Auslass (8) achsparallel und insbesondere koaxial zur Längsachse (3) der Drallkammer (2) angeordnet ist.

4. Abscheider nach einem der Ansprüche 1 bis 3, **dadurch gekennzeichnet, dass** das Volumen des Sammelraumes (23) den Nachabscheider (10) darstellt oder der Nachabscheider (10) mindestens eine Prallfläche (11) für das mit dem Entlüftungsstrom (6) mitgeführte Öl (9) aufweist.

5. Abscheider nach Anspruch 4, **dadurch gekennzeichnet, dass** der Nachabscheider (10) als Labyrinth für den Entlüftungsstrom (6) mit mehreren Prallflächen (11, 12, 13, 14) ausgebildet ist.

6. Abscheider nach Anspruch 4 oder 5, dadurch gekenntzeichnet, dass mindestens eine Prallfläche (11, 12) zumindest näherungsweise senkrecht zur Längsachse (3) der Drallkammer (2) angeordnet ist.

7. Abscheider nach einem der Ansprüche 1 bis 6, **dadurch gekennzeichnet, dass** mehrere Drallkammern (2) parallel zu einander geschaltet sind.

8. Abscheider nach Anspruch 7, **dadurch gekennzeichnet, dass** ein insbesondere als Schieberegister ausgebildetes Register (15) zur motorlastabhängigen Zu- und Abschaltung einzelner Drallkammern (2) vorgesehen ist.

9. Abscheider nach Anspruch 8, **dadurch gekennzeichnet, dass** die Ansteuerung des Registers (15) durch eine Druckdose (20) erfolgt, welche die Zahl der geöffneten Drallkammern (2) in Abhängigkeit vom Druck im Kurbelgehäuse steuert.

10. Abscheider nach Anspruch 9, **dadurch gekennzeichnet, dass** das Register (15) bei maximal zulässigem Druck im Kurbelgehäuse eine zu den Drallkammern parallel angeordnete Öffnung freigibt, so dass ein Teil des Entlüftungsgases an den Drallkammern (2) vorbei zur Reingasseite strömen kann.

## Claims

1. Separator (1) for a crankcase ventilation of an internal combustion engine, comprising at least one swirl chamber (2) extending along a longitudinal axis (3), the swirl chamber (2) featuring with regard to its longitudinal axis (3) a tangential inlet (5) for a ventilation flow (6) at an inlet-sided end (4), the swirl chamber (2) featuring with regard to the longitudinal axis (3) a common outlet (8) for the ventilation flow (6) and oil (9) carried with the ventilation flow (6) at its outlet-sided end (7) opposing the inlet-sided end (4) and an after-separator (10) being disposed downstream of the swirl chamber (2).

2. Separator according to claim 1, **characterized in that** the swirl chamber (2) tapers at least sectionwise from the inlet (5) to the outlet (8) conically or via a diameter jump.

3. Separator according to claim 1 or 2, **characterized in that** the outlet (8) is disposed parallel to the axis and in particular coaxially to the longitudinal axis (3) of the swirl chamber (2).

4. Separator according to one of the claims 1 to 3, **characterized in that** the volume of the collecting chamber (23) represents the after-separator (10) or that the after-separator (10) features at least one deflector surface (11) for the oil (9) carried with the ventilation flow (6).

5. Separator according to claim 4, **characterized in that** the after-separator (10) is designed as labyrinth for the ventilation flow (6) with several deflector surfaces (11, 12, 13, 14).

6. Separator according to claim 4 or 5, **characterized in that** at least one deflector surface (11, 12) is disposed at least approximately perpendicular to the longitudinal axis (3) of the swirl chamber (2).

7. Separator according to one of the claims 1 to 6, **characterized in that** several swirl chambers (2) are connected in parallel to each other.

8. Separator according to claim 7, **characterized in that** a register (15) designed in particular as shift register is provided for activation and deactivation of individual swirl chambers (2) depending on the engine load.

9. Separator according to claim 8, **characterized in that** the activation of the register (15) is realized via a pressure cartridge (20) which controls the number of the opened swirl chambers (2) depending on the pressure in the crankcase.

10. Separator according to claim 9, **characterized in that** the register (15) opens an opening disposed in parallel to the swirl chambers when the maximum admissible pressure in the crankcase is reached so that one part of the venting gas can bypass the swirl chambers (2) to flow to the clean gas side.

## Revendications

1. Séparateur (1) pour une ventilation du carter de vilebrequin d'un moteur à combustion interne, comprenant au moins une chambre de turbulence (2) s'étendant le long d'un axe longitudinal (3), la chambre de turbulence (2) présentant une entrée tangentielle (5) pour un flux de ventilation (6) à une extrémité côté entrée (4) par rapport à son axe longitudinal (3), la chambre de turbulence (2) présentant une sortie commune (8) pour le flux de ventilation (6) à une extrémité côté sortie (7) opposée à son extrémité côté entrée (4) par rapport à son axe longitudinal (3), et comprenant de l'huile (9) acheminée avec le flux de ventilation (6), et un séparateur consécutif (10) étant monté en aval de la chambre de turbulence (2).

2. Séparateur selon la revendication 1, **caractérisé en ce que** la chambre de turbulence (2) rétrécit, au moins sur certaines sections, de l'entrée (5) vers la sortie (8), notamment sous forme de cône ou par un saut de diamètre.

3. Séparateur selon la revendication 1 ou 2, **caractérisé en ce que** la sortie (8) est disposée de façon axialement parallèle et en particulier de façon coaxiale par rapport à l'axe longitudinal (3) de la chambre de turbulence (2).

4. Séparateur selon l'une des revendications 1 à 3, **caractérisé en ce que** le volume de l'espace collecteur (23) représente le séparateur consécutif (10) ou que le séparateur consécutif (10) est doté d'au moins une surface d'impact (11) pour l'huile (9) acheminée avec le flux de ventilation (6).

5. Séparateur selon la revendication 4, **caractérisé en ce que** le séparateur consécutif (10) est exécuté en tant que labyrinthe pour le flux de ventilation (6) et comporte plusieurs surfaces d'impact (11, 12, 13, 14).

6. Séparateur selon la revendication 4 ou 5, **caractérisé en ce qu'**au moins une surface d'impact (11, 12) est disposée au moins à peu près à la verticale par rapport à l'axe longitudinal (3) de la chambre de turbulence (2).

7. Séparateur selon l'une des revendications 1 à 6, **caractérisé en ce que** plusieurs chambres de turbulence (2) sont commutées en parallèle les unes aux autres.

8. Séparateur selon la revendication 7, **caractérisé en ce qu'**un registre (15) exécuté en particulier en tant que registre coulissant est prévu pour activer et désactiver des chambres de turbulence (2) individuelles en fonction de la charge du moteur.

9. Séparateur selon la revendication 8, **caractérisé en ce que** le pilotage du registre (15) s'effectue au moyen d'une cartouche de pression (20) qui commande le nombre de chambres de turbulence (2) ouvertes en fonction de la pression régnant dans le carter de vilebrequin.

10. Séparateur selon la revendication 9, **caractérisé en ce que** le registre (15) libère, lorsque la pression maximale admissible est présente dans le carter de vilebrequin, une ouverture parallèle aux chambres de turbulence de manière à ce qu'une partie du gaz de ventilation puisse passer devant les chambres de turbulence (2) pour s'écouler vers le côté de gaz pur.
